# EUROPEAN PATENT APPLICATION

(11) **EP 0 928 756 A1**
(43) Date of publication of application: **14.07.1999**
(21) Application number: 98204071.9
(22) Date of filing: 02.12.1998
(51) Int. Cl.: B65F 3/00, F16P 3/14

(54) **Refuse collection vehicle provided with safety means**

(30) Priority: 08.12.1997 NL 1007733
(71) Applicant: GEESINK B.V., NL-8305 AG Emmeloord (NL)
(72) Inventor: Elbrink, Heinrich Johannes, 8302 RB Emmeloord (NL)
(74) Representative: Iemenschot, Johannes Andreas, Ir.

(57) **Abstract**

A refuse collection vehicle comprising a chassis 1, a loading container 2 which is mounted on the chassis and a loading device 3 for emptying refuse containers into the loading container is provided with safety means for preventing unsafe situations. The safety means comprise at least one contactless detection element 11 which has a defined scanning area 12 and is connected to control means of the vehicle. In order to be able to check that the detection element is functioning correctly, the detection element 11 can be moved from a normal operating position A into a checking position B. The vehicle is furthermore provided with a measurement object 13 which is situated in the scanning area of the detection element or can be moved into the said area when the detection element 11 is situated in the checking position B, and with checking means which can be used to check whether the measurement object 13 is signalled by the detection element 11 in the checking position B.

## Description

The invention relates to a refuse collection vehicle comprising a chassis, a loading container which is mounted on the chassis and a loading device for emptying refuse containers into the loading container, the vehicle being provided with safety means for preventing unsafe situations, which safety means comprise at least one contactless detection element which has a defined scanning area and is connected to control means of the vehicle.

Various embodiments of a refuse collection vehicle of this nature are described in Dutch Patent Application 1003535, which is not a prior publication, in the name of the applicant. The refuse collection vehicle described is provided with a plurality of detection elements which have the purpose of providing effective protection for the working area of movable parts of the vehicle, so that unsafe situations cannot arise. The area scanned by the detection elements may be two-dimensional or three-dimensional.

The object of the invention is to further increase the safety of a refuse collection vehicle of the type described by providing the possibility of checking whether the detection element or the detection elements is/are operating correctly during operation, so that it is impossible for unsafe situations to arise as a result of a detection element which is not functioning correctly or is defective.

This object is achieved by the fact that the detection element can be moved from a normal operating position into a checking position and the vehicle is provided with a measurement object which is situated in the scanning area of the detection element or can be moved into the said area when the detection element is situated in the checking position, and with checking means which can be used to check whether the measurement object is signalled by the detection element in the checking position.

The invention also relates to a method for checking, during operation, that a contactless detection element, which forms part of safety means of a refuse collection vehicle and has a defined scanning area, is functioning correctly, the detection element being moved into a checking position which differs from the standard operating position and a measurement object being moved into the scanning area of the detection element, a check then being carried out, in the checking position of the detection element, as to whether the measurement object is signalled by the detection element, the detection element then being moved back into the operating position.

Preferred embodiments of the refuse collection vehicle and the method according to the invention are defined in the dependent claims.

The invention will be explained in more detail in the following description of an exemplary embodiment of the invention with reference to the drawing, in which:
Fig. 1 shows a side view of a refuse collection vehicle according to the invention, of the rear-loader type,
Fig. 2 shows the rear section of the refuse collection vehicle in accordance with Fig. 1, which is provided with a detection element.

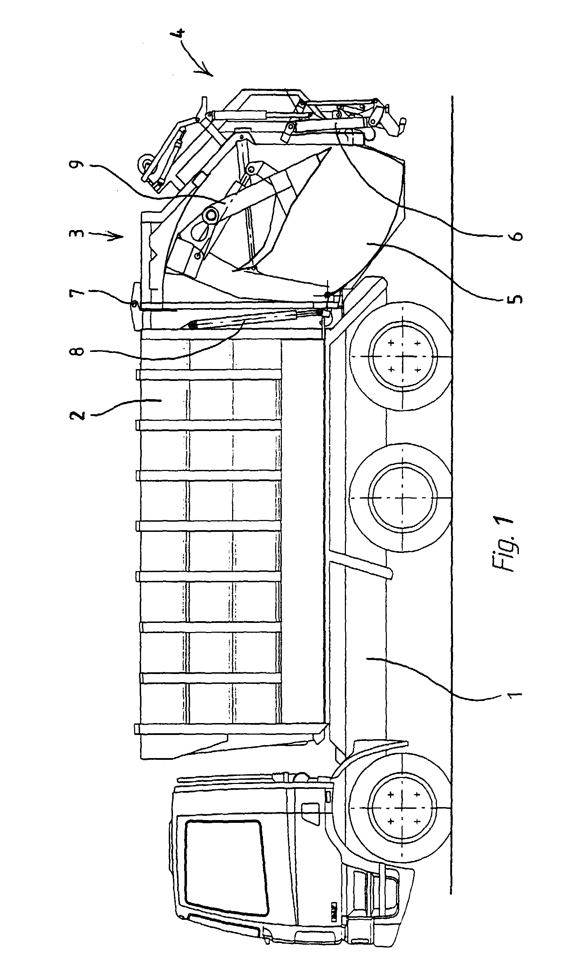

Fig. 1 shows a side view of a refuse collection vehicle of the rear-loader type. The vehicle comprises a chassis 1 and a loading container 2 which is mounted on the chassis. A rear loader 3, which is pivotably connected to the loading container 2 at the points 7, is mounted on the loading container. The rear loader 3 can be pivoted by means of cylinders 8 which are arranged between the loading container 2 and the rear loader 3.

A loading device 4, with which refuse containers can be emptied by pouring their contents into a receptacle 5 of the rear loader 3, is attached to the rear loader 3. Refuse can also be thrown into the receptacle 5 by hand. The rear loader 3 is provided with a compression mechanism 9, with which the refuse is compressed out of the receptacle 5 into the loading container 2.

The working area of the loading device 4, in particular of the moving parts of this device, is to be protected so as to ensure that unsafe situations cannot arise if a person, object or the like is situated in this working area. In such an event, the loading device 4 must not be able to move. The working area of the loading device is to be understood as meaning the area in which the movable parts of the loading device are able to move, and also the surrounding area, which is to be free of people, objects or the like in order to be able to ensure that these parts move safely. In the case of the refuse collection vehicle illustrated, the working area of the loading device 4 is situated at the rear of the vehicle.

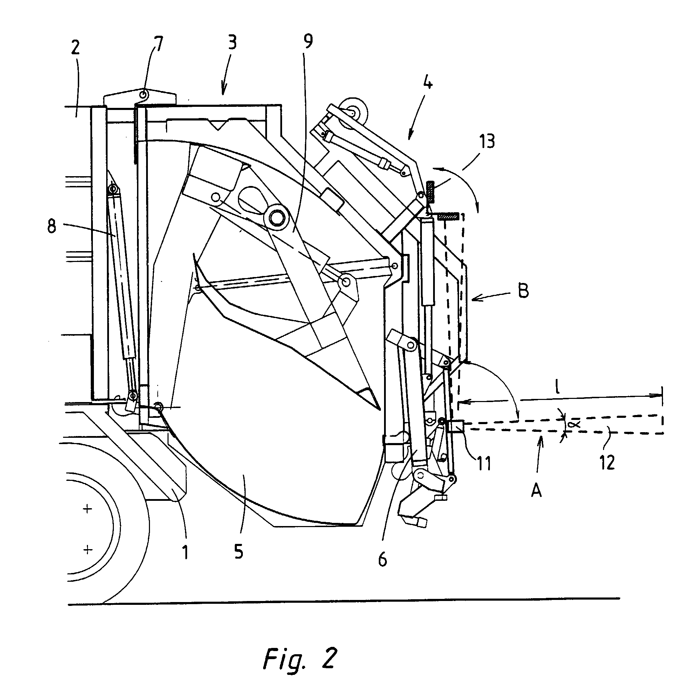

As can be seen in Fig. 2, at least one contactless detection element 11, which is coupled to control means (not shown) of the vehicle, is arranged on the rear side of the vehicle in order to protect this area. The detection element 11 is arranged and directed in such a manner that a two-dimensional or three-dimensional scanning area 12 can be scanned, as indicated in Fig. 2 by dashed lines, with a window length 1 and a window angle a. This scanning area 12 protects the area of movement of the loading device and a refuse container which is to be handled by the loading device. If parts of the body of a person or an object moves into the scanning area 12 during the (automatic) movement of the loading device, the loading device 4 will stop moving, thus averting danger.

In order to be able to check that the detection element 11 is functioning correctly, the detection element can be moved from the normal operating position A, in which the scanning area extends substantially horizontally backwards from the detection element, into a checking position B, in which the scanning area extends substantially vertically upwards. In the embodiment illustrated, the vehicle is also provided with a movable measurement object 13 which can be moved into the scanning area 12 of the detection element 11 when this element is in the checking position B. The distance between the measurement object 13 and the detection element 11 substantially corresponds to the maximum detection distance of the detection element 11.

In the embodiment shown here, the movable measurement object is formed by a rotatable plate 13 which can be rotated into the scanning area 12 of the detection element 11, which is in the checking position B.

The measurement object may also be in a fixed position which is such that it is in the scanning area 12 of the detection element, when the detection element is in the checking position B. The vehicle is also provided with checking means which are not shown in the drawing and which can be used to check whether the measurement object 13 is signalled by detection element 11 in the checking position B.

The detection element 11 is coupled to a switch (not shown) for determining the position, i.e. operating position A or checking position B, of the detection element 11. If the measurement object is of movable design, the measurement object is coupled to a switch (not shown) for determining the position of the measurement object.

If the measurement object is movable, a checking cycle could be carried out as follows.

Before starting up the loading device 4, the detection element is moved into the checking position B in which the detection element 11 is directed upwards. This position B is signalled by the switch which is coupled to the detection element. In this position, when the control means of the vehicle provide the order to do so, the detection element could begin to signal the presence of the measurement object 13.

After the measurement object 13 has been rotated into the scanning area 12, the control means check whether the detection element 11 is in fact signalling the presence of the measurement object 13. If everything is found to be in order, the detection element 11 is rotated back into its horizontal operating position A. To do this, the detection element must first be deactivated, since the scanning area 12 rotates past the measurement object 13. The loading device 4 is only enabled for the purpose of automatic loading when the detection element 11 has reached its operating position A, which is checked by the switch which is coupled to the detection element 11.

The detection element could also be checked using a fixed measurement object. A fixed measurement object could be sabotaged by arranging a fixed object close to the detection element 11. By making the measurement object 13 movable, so that the measurement object is not situated in the scanning area 12 of the detection element 11 at the start of the check, this possibility is prevented. When the control means are checking the detection element 11, initially there should be no signal. However, if there is a signal indicating a sabotage object or a hand or something similar, the loading device 4 switches over to manual operation.

In addition to the checking system for the detection element described here, it is also possible to use other checking systems for checking that the detection element is working correctly.

In the example shown here, the operation of checking that the detection element is functioning correctly is described for one specific detection element 11. Dutch Patent Application 1003535, which is not a prior publication, in the name of the applicant, the contents of which are referred to here, describes various types of refuse collection vehicles with various detection elements for protecting the working area of the loading device of the various vehicles. It will be clear that correct functioning of each of the detection elements described and shown in the abovementioned patent application can be checked in a manner as described above with reference to Fig. 2. In this context, it should be noted that the detection elements and associated measurement objects do not necessarily have to be rotatable but may also be displaceable.

Contactless detection elements which can be used in a refuse collection vehicle according to the invention are known in the prior art and may be of various types.

In the case of a sonar-type detection element, a person or object is signalled by the reflection of sound. In this case, sound with a frequency of approx. 100 to 500 kHz is used, depending on the intended application.

There are also opto-electrical detection elements which operate using the principle of reflection of light. In this case, light having a frequency of approx. 10¹² to 10¹⁴ kHz (infrared) is generally used.

A particular form of opto-electrical detection element is a detection element which can be used to scan an area which has been input in advance, by means of a laser beam. A sector of, for example, 180° can be covered by emitting the laser beam at angular increments of, for example, 0.1°. Since the scanning area of the laser beam is to be changed quickly, the scanning distance can be adapted and preset for each transmission angle or emission of a laser beam. By making the laser beam scan at a transmission angle of 0° and over a distance of 1 metre, then allowing the scanning distance to increase to √5 metres at a transmission angle of approx. 63.5°, then allowing the scanning distance to fall to 2 metres at a transmission angle of 90°, and then allowing the scanning distance to increase and decrease again at transmission angles of 116.5° and 180°, as described above, it is possible to protect a square area of 2 by 2 metres.

## Claims

1. Refuse collection vehicle comprising a chassis, a loading container which is mounted on the chassis and a loading device for emptying refuse containers into the loading container, the vehicle being provided with safety means for preventing unsafe situations, which safety means comprise at least one contactless detection element which has a defined scanning area and is connected to control means of the vehicle, it being possible for the detection element to move from a normal operating position into a checking position, and the vehicle being provided with a measurement object which is situated in the scanning area of the detection element or can be moved into the said area when the detection element is situated in the checking position, and with checking means which can be used to check whether the measurement object is signalled by the detection element in the checking position.

2. Refuse collection vehicle according to claim 1, in which the distance between the measurement object and the detection element substantially corresponds to the maximum detection distance of the detection element.

3. Refuse collection vehicle according to claim 1 or 2, in which the detection element is coupled to a switch for determining the position (operating position or checking position) of the detection element.

4. Refuse collection vehicle according to one of claims 1-3, in which the measurement object is movable and can be moved into the scanning area of the detection element, which is in the checking position.

5. Refuse collection vehicle according to claim 4, in which the movable measurement object is formed by a rotatable plate which can be rotated into the scanning area of the detection element, which is in the checking position.

6. Refuse collection vehicle according to claim 4 or 5, in which the measurement object is coupled to a switch for determining the position of the measurement object.

7. Method for checking, during operation, that a contactless detection element, which forms part of safety means of a refuse collection vehicle and has a defined scanning area, is functioning correctly, the detection element being moved into a checking position which differs from the standard operating position and a measurement object being moved into the scanning area of the detection element, a check then being carried out, in the checking position of the detection element, as to whether the measurement object is signalled by the detection element, the detection element then being moved back into the operating position.

8. Method according to claim 7, in which the measurement object is moved into the scanning area at the maximum detection distance of the detection element.

9. Method according to claim 7 or 8, in which the measurement object is movable and is moved into the scanning area of the detection element, which is in the checking position.

10. Method according to one of claims 7-9, in which the various checks are carried out by control means which are arranged on the refuse collection vehicle.
